(19) Europäisches Patentamt
European Patent Office
Office européen des brevets

(11) **EP 3 862 927 A1**

(12) **EUROPEAN PATENT APPLICATION**

(43) Date of publication:
**11.08.2021 Bulletin 2021/32**

(51) Int Cl.:
***G06N 3/04*** *(2006.01)*    ***G06N 3/08*** *(2006.01)*

(21) Application number: **20305106.5**

(22) Date of filing: **05.02.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ANOTHER BRAIN
75002 Paris (FR)**

(72) Inventors:
• ELINE, Pierre
  **75002 PARIS (FR)**
• DEHAENE, David
  **75002 PARIS (FR)**

(74) Representative: **Marks & Clerk France
Immeuble "Visium"
22, avenue Aristide Briand
94117 Arcueil Cedex (FR)**

(54) **ANOMALY DETECTOR, METHOD OF ANOMALY DETECTION AND METHOD OF TRAINING AN ANOMALY DETECTOR**

(57)    An anomaly detector uses two neural networks, the first, a general purpose classifying convolutional neural network operates as a teacher neural network, while a second neural network in an auto-encoder type configuration. Each of the two neural networks receives the same input stream, and generates respective feature outputs at different levels, corresponding to different resolutions for image data. The respective outputs of the two neural networks are compared at each level, and the resulting difference values consolidated across the difference levels to obtain a final difference value. In a training phase this difference value is used to drive the determination of the weights and biases of the auto-encoder, so as to obtain a auto-encoder trained for a particular input type, under the influence of the teacher neural network. In an operational mode, the difference value is compared to a threshold to determine whether a particular sample is anomalous or not. In certain embodiments, difference values a different levels may be scaled so as to be superimposed at a common resolution, thereby providing an error map indicating the location of anomalous values across the sample.

**FIG. 1**

**EP 3 862 927 A1**

**Description**

FIELD OF THE INVENTION

The present invention relates to the field of management of normal and abnormal data. More specifically, it relates to a neural network based anomaly detector, a method of neural network based anomaly detection and method of training a neural network based anomaly detector.

BACKGROUND PRIOR ART

The distinction between normal and abnormal data is a growing field of search that has a number of applications. One of them is anomaly detection and localization. Its purpose is to detect automatically if a sample of data is "normal" of "abnormal", and, when an anomaly is detected, localize it. A concrete application of this is the detection, in a production line, of normal or abnormal products. This can be done by taking a picture of each product, and automatically detecting if the picture corresponds to a normal and abnormal product.
The automatic detection of what is "normal" and what is "abnormal" is a notoriously difficult problem, which has been addressed in different ways, which generally rely on learning and generating one or more data models.
A first approach to tackle this issue consists in performing supervised learning. Supervised learning consists in learning models from labeled input data: each learning sample is associated with a label indicating if the sample is normal and abnormal. Abnormal samples may also be associated with labels indicating a type of anomaly. Once the model is trained, it can be used to classify new samples either as normal or abnormal. The problem with such approaches is that the model can only learn anomalies which have already been encountered. Therefore, they present a strong risk that a sample which is abnormal, but whose anomaly has not been learnt previously will be classified as normal.
On the other hand, unsupervised learning can detect anomalies without needing labeled abnormal learning data. In order to do so, some solutions learn a generative model of the data using a set of learning sample representing normal data: the purpose of such a model is to output a sample that could be considered to be part of the original data distribution, given an input in some compressed data space. In image processing, typical values can be to generate 256*256 pixel images from a 64 dimensions compressed data space. Such models are mainly generative adversarial networks (GAN), variational auto-encoders (VAE), PixelCNN, and hybrids of those models. Given a sample, to detect an anomaly, existing solutions encode the sample into their compressed data space, then decode the compressed representation to obtain a new, generated, sample that we call the "reconstruction". They also allow localizing the anomaly, by comparing the reconstruction to the input sample, for example pixel per pixel, or using more global filters, and considering that a zone of the sample that is different from the reconstruction is the localization of an anomaly. A characteristic of prior art systems is a tendency to flag as anomalies deviations that a human assessor would deem insignificant, whilst overlooking other deviations that a human assessor would consider unacceptable.
There is therefore the need of a method and device which is able to effectively identify anomalies based on a limited training phase.

SUMMARY OF THE INVENTION

In accordance with the present invention in a first aspect there is provided a method of constructing an anomaly detector for detecting an anomaly in a digital sample of a predetermined type and predetermined first resolution. The method comprises exposing a teacher neural network trained to extract features from digital data sets, to a plurality of digital samples of a training dataset of the predetermined type, to extract features representing each said digital sample at one or more level, exposing an auto-encoder to each digital sample to reconstruct features representing the digital sample at one or more levels, determining a difference value reflecting the difference between the extracted features and respective reconstructed features for each said sample and repeating the steps of reconstructing features representing said training dataset with further said parameters until a minimal difference value is obtained across the training dataset.
In a development of the first aspect, the training dataset of the neural network is greater than the training dataset of the anomaly detector.
In a further development of the first aspect, the method comprises the further step of selecting a threshold indicating the presence of an anomaly with reference to the distribution of difference values obtained across the training dataset.
In a further development of the first aspect, the minimum difference value obtained across the training dataset is selected as the threshold indicating the presence of an anomaly.
In a further development of the first aspect, the method comprises the further steps of identifying a subset of the datasets of the training dataset as constituting anomalous datasets, and isolating the difference values output by

2

the anomaly detector for the anomalous datasets to derive a characteristic difference value, and selecting a threshold indicating the presence of an anomaly with reference to the characteristic difference value.

In a further development of the first aspect, the method comprises the further step of adjusting the resolution of the features output by the teacher neural network or the auto-encoder or the output of one or more error determinations to a standard resolution.

In a further development of the first aspect, the method comprises the further steps of adjusting the resolution of the features output by each said error determination to a standard resolution, wherein said step of determining a difference value comprises up-sampling each said set of features to a predetermined resolution, consolidating the up-sampled sets of features and then summing over the consolidated dataset to obtain said difference value.

In a further development of the first aspect, the method comprises the further steps of exposing a teacher neural network trained to extract features from digital data sets said digital sample to extract features representing said digital sample at one or more levels, exposing an auto-encoder trained to reconstruct said features of a training dataset of the predetermined type to the digital sample to reconstruct features representing the digital sample at one or more levels, determining a difference value reflecting the difference between each extracted feature and a respective reconstructed feature and comparing said difference value to a threshold, and in a case where said difference value exceeds said threshold, identifying said digital sample as anomalous.

In a further development of the first aspect, the method comprises the further step of adjusting the resolution of the features output by the teacher neural network or the auto-encoder or the output of one or more error determinations to a standard resolution.

In a further development of the first aspect, the method comprises the further steps of adjusting the resolution of the features output each error determination to a standard resolution, wherein said step of determining a difference value comprises up-sampling each set of features to a predetermined resolution, consolidating the up-sampled sets of features and then summing over the consolidated dataset to obtain a difference value map, and comparing each value of said difference value map to a second threshold, and flagging values in an anomaly map exceeding said threshold as anomalous.

In accordance with the present invention in a second aspect there is provided an anomaly detector for detecting anomalies in digital samples. The anomaly detector comprises a teacher neural network trained to extract features from digital data sets at one or more levels, an auto-encoder trained to reconstruct features representing the digital sample at one or more levels, a difference calculator adapted to determine a difference value reflecting the difference between said extracted features and a respective said reconstructed feature, and to compare said difference value to a threshold, and in a case where said difference value exceeds said threshold, to identify said digital sample as anomalous.

In a further development of the second aspect the anomaly detector further comprises an adaptor unit configured to adjust the resolution of the features output by the teacher neural network or the auto-encoder or by said difference calculator to a standard resolution.

In a further development of the second aspect the adaptor unit is configured to adjust the resolution of the features output by said difference calculator to a standard resolution, said anomaly detector further comprising an error mapper comprising an up-sampler configured to up-sample each set of features to a predetermined resolution, to consolidate the up-sampled sets of features and then sum the error values over the consolidated dataset to compile a difference value map, and to compare each value of the difference value map to a second threshold, and to flag values in an anomaly map exceeding said threshold as anomalous.

In a further development of the second aspect the teacher neural network comprises a trained convolutional neural network.

In accordance with the present invention in a second aspect there is provided a computer program comprising instructions implementing the steps of the first aspect.

BRIEF DESCRIPTION OF THE DRAWINGS

The invention will be better understood and its various features and advantages will emerge from the following description of a number of exemplary embodiments provided for illustration purposes only and its appended figures in which:

Figure 1 shows an anomaly detector for detecting anomalies in digital samples in accordance with a first embodiment;

Figure 2 shows an example of a convolutional neural network adaptable for use in certain embodiments;

Figure 3 represents an example of an auto-encoder in a number of embodiments of the invention;

Figure 4 shows a method of constructing an anomaly detector for detecting an anomaly in a digital sample of a predetermined type and predetermined first resolution in accordance with an embodiment;

Figure 5 shows a method of detecting an anomaly in a digital sample of a predetermined type;

Figure 6 shows an anomaly detector in accordance with a further embodiment;

Figure 7 shows an anomaly detector in accordance with a further embodiment.

Figure 8 shows examples of anomaly detection with respect to certain real sample datasets.

DETAILED DESCRIPTION OF THE INVENTION

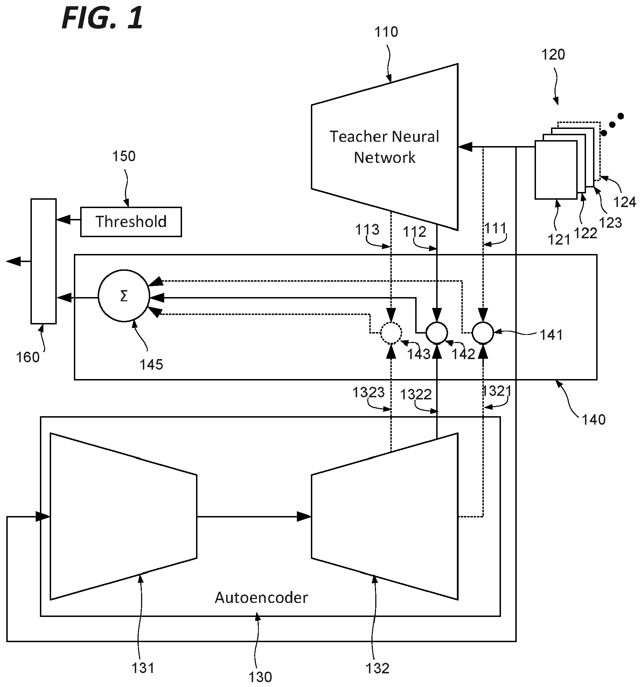

Figure 1 shows an anomaly detector for detecting anomalies in digital samples in accordance with a first embodiment.

As shown in figure 1, there is provided an anomaly detector comprising a teacher neural network 110. In accordance with the invention, this teacher neural network is trained to extract features from digital data sets at one or more levels.

The digital samples 121, 122, 123, 124 etc. will generally be of a particular type. For example, the digital samples may comprise images, sound data, data from an electronic nose, and the like. For the purposes of the following examples, the digital samples will be described generally in terms of image data, however the skilled person will appreciate that embodiments may process data samples of any consistent type.

In particular, data samples may represent samples of an industrial product, for example on a production line, whereby the detection of anomalies may contribute to a quality control or other manufacturing process.

The teacher neural network 110 may comprise any convolutional neural trained to extract features from digital data sets at one or more levels as discussed in more detail below. The training of this teacher neural network 110 is outside the scope of the present invention. The teacher neural network is trained to classify data samples of the type to be processed as discussed above, but need not be specifically trained for the specific expected content of the data samples. For example, if an embodiment is intended to identify structural anomalies in engine parts on the basis of image data, a teacher neural network trained to classify general image data may be selected, but need not be specifically trained to classify engine parts.

A teacher neural network trained to classify general image data may be selected that is not specifically trained to classify the expected content of the data. By using a teacher neural network trained to classify general image data, the output of the anomaly detector in accordance with embodiments has been found to attach significance to certain features in the anomaly detection process in a manner more closely aligned with the degree of significance that a human assessor would assign to these same features.

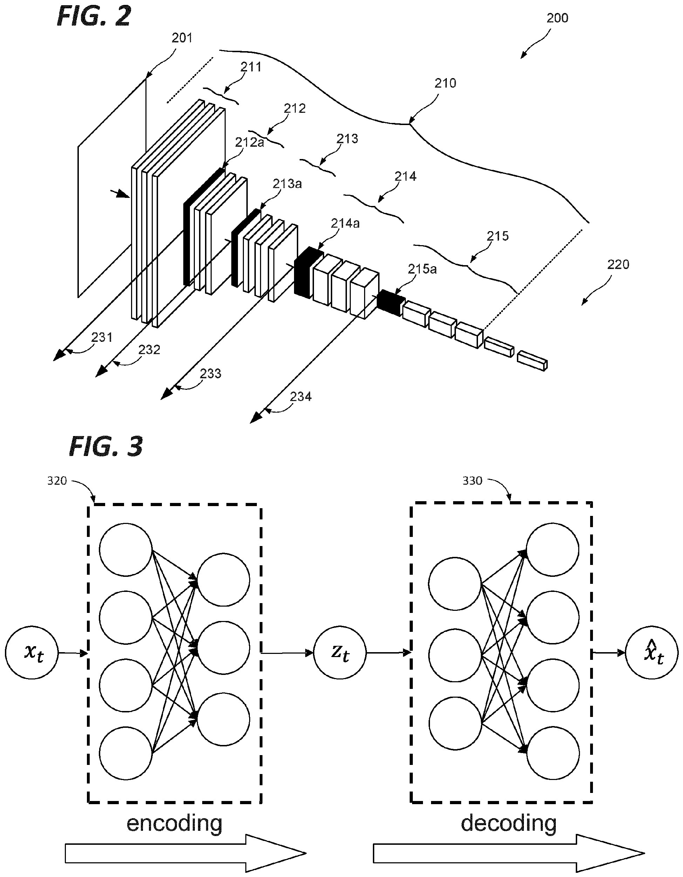

As shown in figure 1 the anomaly detector further comprises an auto-encoder 130 trained to reconstruct features representing said digital sample at one or more levels The number of levels may be one. The number of levels may be two. The number of levels may be three. The number of levels may be any number as conveniently obtainable based on the structure of the neural networks for example as discussed with reference to figures 2 and 3 below, or otherwise. An auto-encoder is a type of artificial neural network that consists in encoding samples to a representation, or encoding of lower dimension, then decoding the sample into a reconstructed sample, and is described for example in Liou, C. Y., Cheng, W. C., Liou, J. W., & Liou, D. R. (2014). Auto-encoder for words. Neurocomputing, 139, 84-96. The principle of auto-encoder is described in more details with reference to figure 3.

On this basis, as shown, the auto-encoder 130 comprises an encoding section 131 and a decoding section 132.

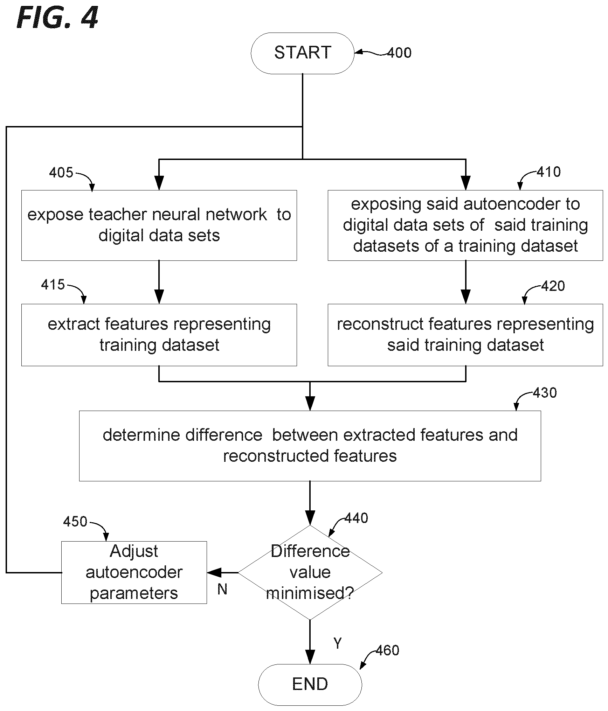

A method of training the auto-encoder 130 is described in further detail with reference to figure 4 below.

As shown, the anomaly detector further comprises a difference calculator 140 adapted to determine a difference value reflecting the difference between the extracted features and a respective reconstructed feature.

More particularly, as shown, the teacher neural network 110 outputs extracted features at two levels indicated by arrows 112 and 113. It will be understood that in the context of convolutional neural networks and as discussed in more detail with reference to figure 2, each level may be presumed to correspond to features at a successively lower resolution. As shown, the teacher neural network outputs extracted features at at least one level represented by arrow 112, other than the native level of the input sample data represented by arrow 111. As shown however, the teacher neural network outputs features at a second level, as represented by the arrow 113. It will be appreciated that features may be output at any number of levels to the extent that these are supported by the underlying structure of the teacher neural network 110.

As shown, the outputs 112, 113 of the teacher neural network, as well as the original data sample are provided to the difference calculator 140. In other embodiments, the original data sample may not be provided to the difference calculator 140, and optionally one or more additional levels output by the teacher neural network may be used instead.

As shown, the difference calculator 140 further receives outputs from the encoder section 132 of the auto-encoder 130. The auto-encoder outputs a final encoded representation of the data sample at output 1321. Lower resolution intermediate outputs are also retrieved. As for the teacher neural network. Auto-encoder 130 outputs extracted features at two intermediate levels indicated by arrows 2323 and 1322. As shown the auto-encoder outputs extracted features three levels including the final encoded representation, represented by arrows 1321 and 1322 and a further level, as represented by the arrow 1323. If the original data sample is not provided to the difference calculator, the final encoded representation may also not be required. It will be appreciated that features may be output at any number of levels to the extent that these are supported by the underlying structure of the auto-encoder 130. For the sake of simplicity it assumed in the present embodiment that each feature output from the teacher neural network is matched with a corresponding feature output from the auto-encoder, and that the final encoded output from the auto-encoder is matched with the original data sample, and that the respective resolutions of each matched pair of features is the same. As discussed below, in other embodiments the number of feature outputs from the auto-encoder and the teacher neural network need not necessarily be the same, and the resolution of matched features as output by the auto-encoder and the teacher neural network need not be identical. In certain embodiments at least two respective levels may be taken into consideration by the difference calculator. Optionally, one of these levels may correspond to the comparison of the original data sample with a final encoded representation determined by the auto-encoder.

As show, on this basis the difference calculator 140 performs e.g. in error calculators 141, 142, 143 a value by value comparison of each matched pair of feature outputs. For example, as shown, error calculator 141 performs a value by value comparison of the original input sample with the final encoded output 1321 of the auto-encoder 130. Error calculator 142 performs a value by value comparison of the first intermediate feature output 112 of the teacher neural network 110 with a corresponding intermediate feature output 1322 of the auto-encoder 130. Error calculator 143 performs a value by value comparison of the second intermediate feature output 113 of the teacher neural network 110 with a corresponding intermediate feature output 1323 of the auto-encoder 130.

In the context of a digital image sample, the value by value comparison may comprise a pixel by pixel comparison.

The sum of the value by value error for each matched pair of extracted features is determined by each error calculator, and output as a level error value. The level error values are then summed in summer 145, possibly with level weighting factors as discussed below, to obtain a difference value, representing the degree of deviation of the input sample.

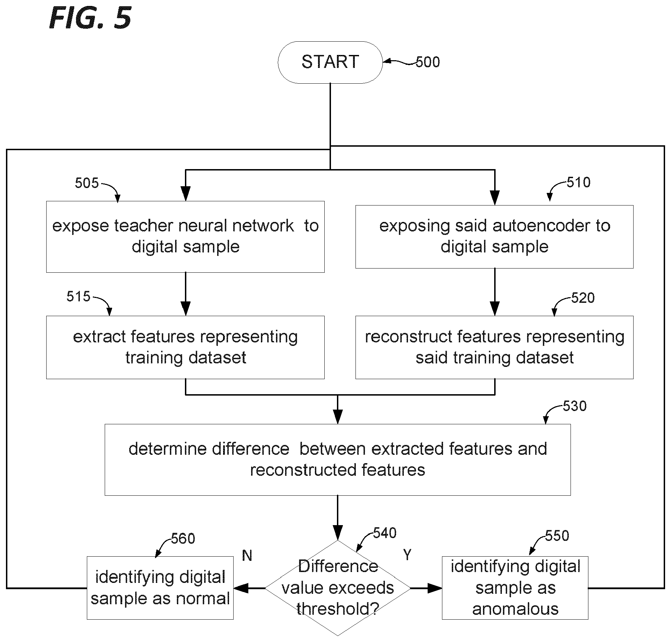

The difference value is then compared to a stored threshold 150. In a training phase, the difference value is used to determine optimisation of the auto-encoder parameters as described with reference to figure 4 below. During anomaly detection, in a case where the difference value exceeds said threshold, to identify said digital sample as anomalous at the output of comparison unit 160, as described with reference to figure 5 below.

As mentioned above, the teacher neural network 110 may comprise any convolutional neural trained to extract features from digital data sets at one or more levels as discussed in more detail below.

Figure 2 shows an example of a convolutional neural network adaptable for use in certain embodiments.

As shown, a convolutional neural network 200 comprises a convolutional part 210 and a fully connected/output layer 220.

Sample data 201 is provided to the left of the neural network, and in operation the data generally flows from left to right, for the final categorisation information for the input sample data to be output from the output section 220 on the right.

As shown, the convolutional neural network comprises a series of convolutional layers 211, 212, 213, 214, 215. The first convolutional layer processes the input sample data at its native resolution, while the subsequent layers 212, 213, 215 each comprise an initial Pooling layer 212a, 213a, 214a, 215a, which down-samples the output of the preceding layer to a new, lower resolution for processing in the current layer.

By way of example, the neural network may be a VGG16 neural network, as developed by the Oxford University Visual Geometry Group. The VGG16 neural network is a high performance deep convolutional neural network developed for image classification. This neural network is available "off the shelf" for free, ready-trained for the general classification of images, for example as represented by the imagenet image database. The structure shown in figure 1 closely resembles that of the VGG16 Neural network, and is an example of a network having the required features of the present invention, of being trained to extract features from digital data sets to digital data sets of an input sample of a predetermined type, and to extract features representing the digital sample at one or more levels.

In particular, the VGG16 Neural network is trained to extract features from digital data sets of the digital image type, and the layers 211, 212, 213, 215 are trained to extract features 231, 232, 233, 234, 235 representing said training dataset at one or more levels as described above.

The skilled person will appreciate that many other Neural Networks can be conceived having the general structure of figure 2, or otherwise, which could be equally well adapted to the present invention. For example, convolutional networks, pretrained as classifiers, image segmentation models, generative models or more generally for any task on a large set of data. Generative Associative Networks such as BigGAN, Image Segmentation models such as YOLO and Image classification models such as Resnet are all potentially applicable. Furthermore, the skilled person will appreciate that a neural network, whether corresponding to the structure of figure 2, or otherwise, may be trained with other training data, and provide a trained neural network which could be equally well adapted to the present invention. In particular, while the VGG16 Neural Network is trained for image recognition, where the dataset is of a type other than that of digital images, it will be necessary to use a Neural Network trained for classification of the dataset type in question.

The Teacher neural network may be a generic, pre-trained neural network as described above, or may be developed and/or trained for the purposes of the present invention, however as stated above the development and training of the teacher neural network is outside the scope of the present invention.

The figure 3 represents an example of an auto-encoder in a number of embodiments of the invention. In particular, figure 3 shows an auto-encoder as may be used to implement the auto-encoder 130 as discussed above.

Auto-encoders have been described for example in Liou, Cheng-Yuan; Huang, Jau-Chi; Yang, Wen-Chie (2008). "Modeling word perception using the Elman network". Neurocomputing. 71 (16-18), and Liou, Cheng-Yuan; Cheng, Wei-Chen; Liou, Jiun-Wei; Liou, Daw-Ran (2014). "Auto-encoder for words". Neurocomputing. 139: 84-96. Auto-encoders are a type of neural networks which are trained to perform an efficient data coding in an unsupervised manner.

An auto-encoder consists in a first neural network 320, that encodes the input vector $x_t$ into a compressed vector noted $z_t$ (t representing the index of the iteration), and a second neural network that decodes the compressed vector $z_t$ into a decompressed or reconstructed vector $\hat{x}_t$. The compressed vector $z_t$ has a lower dimensionality than the input vector $x_t$ and the reconstructed vector $\hat{x}_t$. It is expressed using a set of variables called latent variables, that are considered to represent essential features of the vector. Therefore, the reconstructed vector $\hat{x}_t$ is similar, but in general not strictly equal to the input vector $x_t$.

It is thus possible, at the output of the decoding, to compute both a reconstruction error, or loss function, and a gradient of the loss function. The loss function is noted $L(x_t, \hat{x}_t)$, and can be for example a quadratic function:

$$L(x_t, \hat{x}_t) = \|x_t - \hat{x}_t\|^2$$

*(Equation 1)*

The gradient of the loss function can be noted $\nabla_{x_t} L$.

An auto-encoder will typically be trained in a training phase, with a set of reference vectors. The training phase of an auto-encoder consists in adapting the weights and biases of the neural networks 320 and 330, in order to minimize the reconstruction loss of for the training set. By doing so, the latent variables of the compressed vectors p are trained to represent the salient high-level features of the training set. Stated otherwise, the training phase of the auto-encoder provides an unsupervised learning of compressing the training samples into a low number of latent variables that best represent them.

Therefore, the training of the auto-encoder with a training set of normal samples results in latent feature which are optimized to represent normal samples. Therefore, after the training phase, when the auto-encoder encodes and decodes a normal sample, the compressed vector provides a good representation of the sample, and the reconstruction error is low. On the contrary, if the input vector represents an abnormal sample, or more generally a sample which is not similar to the samples of the training, set, the dissimilarities will not be properly compressed, and the reconstruction error will be much higher.

The training set of reference samples can thus be adapted to the intended training. For example:

- in an application to detect abnormal products from a picture of a given type of products, the training set should be composed of pictures of normal products;
- in an application to perform inpainting, the training set should be composed of complete images;
- in an application to remove unwanted noise from sound, the training set should be composed of sound without unwanted noise;
- in an application to reconstruct missing parts of temperature measurements, the training set should be composed of temperature measurements without missing measurements.

It should be noted that, although an auto-encoder will work with a training set which is generally suited to the intended purpose, the results can typically be further improved by selecting training samples which are as representative as possible to the samples to process. For example:

- in an application to detect abnormal products in a production line of glass bottles, a training set with normal glass bottles (i.e. glass bottles without defects) will generally work, but a training set with glass bottles of the exact same model from the same manufacturer is expected to provide even better results;

- in an application to perform inpainting in faces, a training set composed of complete pictures will generally work, but a training set of images of faces will provide better results;
- in an application to remove unwanted noise from classical piano records, a training set composed of audio tracks without noise will generally work, but a training set composed of classical piano records will provide better results;
- in an application to reconstruct missing parts of temperature measurements, a training set composed of complete temperature measurements will generally work, but a training set composed of complete temperature measurements captured in the same place, and/or in the same conditions, and/or or by the same kind of thermometer than the input samples is expected to provide better results.

The skilled man could thus select the training set that best suits its need according to the intended application. However, the input vector and vectors of the training set need to be of the same type, that is to say have the same dimension, and the corresponding elements of the vectors need to have the same meaning. For example, the input vectors, and vectors of the training set may represent images of the same dimension with the same color representation and bit depth, audio tracks of the same duration, with the same bit depth, etc.

In a number of embodiments of the invention, the auto-encoder is a variational auto-encoder (VAE). The variational auto-encoders are described for example by Kingma, D. P., & Welling, M. (2013). Auto-encoding variational bayes. arXiv preprint arXiv:1312.6114, or Diederik P. Kingma and Volodymyr Kuleshov. Stochastic Gradient Variational Bayes and the Variational Auto-encoder. In ICLR, pp. 1-4, 2014. The variational auto-encoder advantageously provides a very good discrimination of normal and abnormal samples on certain datasets. The invention is however not restricted to this type of auto-encoder, and other types of auto-encoder may be used in the course of the invention.

In a number of embodiments of the invention, the loss of the variational auto-encoder is calculated as:

$$L(x_t, \hat{x}_t) = \|x_t - \hat{x}_t\|^2 - D_{KL}\big(q(z_t|x_t), p(z_t)\big).$$

*(Equation 2)*

This function allows ensuring a generative model is used, that is to say that the model is able to produce samples that have never been used for training.

In the VAE, a decoder model tries to approximate the dataset distribution with a simple latent variables prior p(z), with $z \in \mathbb{R}^l$, and conditional distributions output by the decoder p(x|z). This leads to the estimate $p(x) = \int p(x|z)p(z)dz$ that we would like to optimize using maximum likelihood estimation on the dataset. To render the learning tractable with a stochastic gradient descent (SGD) estimator with reasonable variance it is possible to use importance sampling, introducing density functions q(z|x) output by an encoder network, and Jensen's inequality to get the variational lower bound:

$$log\, p(x) = log\, \mathbb{E}_{z \sim q(z|x)} \frac{p(x|z)p(z)}{q(z|x)} \geq \mathbb{E}_{z \sim q(z|x)} log\, p(x|z) - D_{KL}(q(z|x)\|p(z))$$

*(Equation 3)*

The reconstruction of the VAE can thus be defined as the deterministic sample $f_{VAE}(x)$ obtained by encoding x, decoding the mean of the encoded distribution q(z|x), and taking again the mean of the decoded distribution p(x|z). In order to produce more detailed reconstructions, it is possible to learn the variance of the decoded distribution p(x|z) as proposed by Bin Dai and David P. Wipf. Diagnosing and enhancing VAE models. CoRR, abs/1903.05789, 2019. In such cases, one variance parameter may be learned per feature channel (independently of their position) so that they "properly" scale with one another.

Figure 4 shows a method of constructing an anomaly detector for detecting an anomaly in a digital sample of a predetermined type and predetermined first resolution in accordance with an embodiment.
As shown, the method starts at step 400 before proceeding to steps 405 and 410.

At step 405 a teacher neural network trained to extract features from digital samples of the predetermined type is exposed to digital samples from a training dataset.

From step 405 the method proceeds to step 415, at which features representing each digital sample of the training dataset are extracted at one or more levels. It should be borne in mind that as discussed above the teacher neural network is pre-trained, and the training data a not exposed to the teacher neural network for the purpose of training it, but to elicit feature outputs for the purpose of optimising the training of the auto-encoder as described below.

The teacher neural network of the method of figure 4 may correspond to the teacher neural network 110 or 200 as described above.

At step 410, an auto-encoder is exposed to the same respective digital samples of the training dataset.

From step 410 the method proceeds to step 420 of reconstructing features representing each respective digital sample at one or more levels with a first set of parameters. For example, if the teacher neural network extracts features at three levels (e.g. 111, 112 and 113 in figure 1), the auto-encoder may similarly reconstruct features at three levels, with one of the levels corresponding to the native resolution of the input samples, or otherwise as discussed above.

The operation of the auto-encoder to generate reconstructed features is substantially as described with respect to figure 3 above.

It will be appreciated that while steps 405/415 and 410/420 are shown as being performed in parallel, they may equally be performed in series. Whether performed in series or parallel, they may be performed in a number of different sequences, e.g. "405, 410, 420, 415", "410, 405, 415, 420", "405, 415, 410, 420" or "410, 420,405, 415".

From steps 415/420 the method proceeds to step 430, at which a difference value is determined, reflecting the sum across all samples, of the difference between each extracted feature of each sample and the respective reconstructed feature.

It will be appreciated that while figure 4 shows the determination of the difference value across all samples after all samples are exposed in steps 405, 410, 415, 420, a difference value might equally be obtained for each sample before proceeding to the next sample, in which case the determination of the difference value determined at step 430 may comprise merely combining all of the values previously calculated, or updating a running difference value to incorporate the value obtained for the last sample in the dataset.

The determination of the difference value may comprise summing the difference values obtained across the training set, determining an average, or any other suitable operation. Still further, the dataset may be processed in sub-batches, with an adjustment of parameters between each batch. For example, the difference for 128 samples may be summed or averaged and a gradient descent step taken. This approach reduces the memory requirements for storage of the intermediate computation necessary for gradient descent determination.

The method next proceeds to step 440 at which it is determined whether the difference value in minimised. Determining whether the difference value is minimised may comprise determining whether the difference value has plateaued for a number of epochs (one epoch being the time taken to process the entire dataset), or determining that a fixed number of epochs has expired, comparing the difference value to a predetermined minimum acceptable difference threshold, determining that the best difference level has not improved over a certain number of iterations by more than a minimum improvement threshold, and the like.

In a case where it is determined at step 440 that the difference value is not minimised, the method adjusts the parameters of the auto-encoder at step 450 and loops back to steps 405/410 to repeat the steps of reconstructing features representing said training dataset with new auto-encoder parameters until a minimal said difference value is obtained at step 450.

The adjustment of the parameters of the auto-encoder may be performed in any of the manners known to the skilled person, for example on the basis a stochastic gradient descent algorithm, where model weights are updated each iteration using the back-propagation of error algorithm.

If it is determined that the difference value is minimised, the method terminates at step 460.

By this means, the parameters of the auto-encoder, that is to say, the weights and biases of the neural networks 320 and 330, are optimized not only to best reflect the training data, but to do so in a way best aligned with the output of the teacher neural network for the same sample values.

Since the teacher neural network is trained to categorize general datasets, rather than whatever specific content is present in the training dataset, it may be considered to better reflect general human conceptions of the relative importance of difference sample features, meaning that the auto-encoder trained in this way will not only identify anomalies in an abstract sense, but give greater significance to anomalies that a human being might also consider to be most significant.

As discussed above, the teacher neural network is pre-trained. Nevertheless, the characteristics of the data used to train the teacher neural network will typically be known. In many cases the size the data used to train the teacher neural network may be very great, and much greater that the amount of training data available for the training process described with respect to figure 4. For example, the VGG16 Neural network is trained with 12 million images. As such, the use of the teacher neural network trained with a training set that is greater than the training dataset of the anomaly detector improves the training of the auto-encoder with limited training data.

As discussed above, a minimal difference value is obtained at step 440. This value may be retained as the basis of a threshold for anomaly detection in accordance with methods of anomaly detection in accordance the embodiments of the invention for example as described below. Accordingly, there may be provided a further step of selecting a threshold indicating the presence of an anomaly with reference to the distribution of difference values obtained across said training dataset. For example the minimum said difference value obtained across said training dataset may be selected as a threshold indicating the presence of an anomaly. Other statistical characteristics may equally be used to select the threshold, for example taking a value corresponding to a certain number of standard deviations from the average difference, and the like, as appropriate.

In accordance with certain embodiments, the training dataset may comprise a number of samples pre-identified as representing anomalous data. These may be detected and identified in an existing dataset, or deliberately injected. On this basis, the method of figure 4 may distinguish between the difference values obtained for samples known to be anomalous, and difference values obtained for other samples. On this basis, a threshold for anomaly detection may be selected at a value intermediate to the difference value obtained across samples know to be anomalous, and the difference values obtained across all samples. Accordingly, the method of figure 4 may comprise the further steps of identifying a subset of the datasets of said training dataset as constituting anomalous datasets, and isolating the difference values output by said anomaly detector for said anomalous datasets to derive a characteristic difference value, and selecting a threshold indicating the presence of an anomaly with reference to said characteristic difference value.

As discussed above, it has generally been assumed that the resolution of the features output by the teacher neural network is the same as the resolution of the features output by the auto-encoder at each pair of corresponding levels. It will be appreciated that this need not necessarily be the case- the resolution is dictated by the structure of the underlying neural networks, and in some cases it may expedient to use an available neural network which offers good performance, but for technical reasons outputs features at resolutions different to those available from the other neural network. Where this is the case, there may be provided a further step of adjusting the resolution of the features output by said teacher neural network or said auto-encoder or the output of one or more said error determinations to a standard resolution.

It may be borne in mind that difference calculations are performed for features at each of the levels output by the neural networks, and that depending on the manner in which difference values are expressed, this may naturally lead to difference levels at higher resolutions having a higher value than those obtained at lower resolutions. According to certain embodiments, this may be compensated by multiplying difference values by a resolution correction factor, or otherwise. Alternatively, the features themselves may be up sampled so that all difference values are calculated at the same reference resolution. On this basis, the method may comprise the further steps of adjusting the resolution of the features output by each said error determination to a standard resolution, wherein said step of determining a difference value comprises up-sampling each said set of features to a predetermined resolution, consolidating the up-sampled sets of features and then summing over the consolidated dataset to obtain said difference value.

Figure 5 shows a method of detecting an anomaly in a digital sample of a predetermined type.

As shown in figure 5, the method starts at step 500 before proceeding steps 505 and 510.

At step 505 a teacher neural network trained to extract features from digital samples of the predetermined type is exposed to a digital sample.

From step 505 the method proceeds to step 515, at which features representing the digital sample are extracted at one or more levels.

The teacher neural network of the method of figure 5 may correspond to the teacher neural network 110 or 200 as described above.

At step 510, an auto-encoder trained to reconstruct said features of a training dataset of said predetermined type is exposed to the same respective digital samples of the training dataset.

The auto-encoder may have been trained to reconstruct said features of a training dataset of said predetermined type by means of the method described above with regard to figure 4.

From step 510 the method proceeds to step 520 of reconstructing features representing each respective digital sample at one or more levels. That is to say, if the teacher neural network extracts features at three levels (e.g. 112 and 113 in figure 1), the auto-encoder may also reconstruct features at three levels, with one of the levels corresponding to the native resolution of the input sample, or otherwise as discussed above.

The operation of the auto-encoder to generate reconstructed features is substantially as described with respect to figure 3 above.

It will be appreciated that while steps 505/515 and 510/520 are shown as being performed in parallel, they may equally be performed in series. Whether performed in series or parallel, they may be performed in a number of different sequences, e.g. "505, 510, 520, 515", "510, 505, 515, 520", "505, 515, 510, 520" or "510, 520, 505, 515".

From steps 515/520 the method proceeds to step 530, at which a difference value is determined, reflecting the respective difference values obtained for each level comparison performed for a pair of features as output by the teacher neural network and auto-encoder respectively as described above for the input sample, that is to say, of the difference between each extracted feature the sample and the respective reconstructed feature, and between the input sample and the respective said reconstructed feature.

The method next proceeds to step 540 at which the difference value obtained at step 540 is compared to a threshold, and in the case where the difference value exceeds the threshold, the sample is identified as anomalous at step 550.

In a case where a sample is identified as anomalous some further steps may be implemented as required, for example halting a production line, diverting an anomalous article to a waste bin or for further inspection, performing some remedial action, issuing an alarm, marking the article corresponding to the anomalous determination in some way, or otherwise. The method may then terminate, or as shown loop back to steps 505 and 510 for a new sample.

In a case where a sample is identified as not anomalous the method proceeds to step 560 of identifyin the sample as normal, and some further steps may be implemented as required, for example moving an article to a next processing step in a production line, issuing a chime or other indication of approval, marking the article corresponding to the non-anomalous determination in some way for example affixing a quality control marking, or otherwise. The method may then terminate, or as shown loop back to steps 505 and 510 for a new sample. It will be appreciated that in some embodiments, steps 560 or 550 may be performed tacitly, for example a sample may be identified as normal simply by the fact that it is not identified as anomalous, and allowed to proceed in the production chain, etc.

As discussed above, it has generally been assumed that the resolution of the features output by the teacher neural network is the same as the resolution of the features output by the auto-encoder at each pair of corresponding levels. It will be appreciated that this need not necessarily be the case- the resolution is dictated by the structure of the underlying neural networks, and in some cases it may expedient to use an available neural network which offers good performance, but for technical reasons outputs features at resolutions different to those available from the other neural network. Where this is the case, there may be provided a further step of adjusting the resolution of the features output by said teacher neural network or said auto-encoder or the output of one or more said error determinations to a standard resolution.

It may be borne in mind that difference calculations are performed for features at each of the levels output by the neural networks, and that depending on the manner in which difference values are expressed, this may naturally lead to difference levels at higher resolutions having a higher value than those obtained at lower resolutions. According to certain embodiments, this may be compensated by multiplying difference values by a resolution correction factor, or otherwise. Alternatively, the features themselves may be up sampled so that all difference values are calculated at the same reference resolution. By up-sampling the features and/or error calculations, it becomes possible to superimpose the features or error sets to obtain an overall mapping of the location of error values across a sample, by adding errors bitwise, pixel-wise, or generally on a value by value basis, so as to obtain an anomaly map. On this basis, the method may comprise the further steps of adjusting the resolution of the features output each said error determinations to a standard resolution, wherein the step of determining a difference value comprises up-sampling each said set of features to a predetermined resolution, consolidating the up-sampled sets of features and then summing over the consolidated dataset to obtain a difference value map, and comparing each value of said difference value map to a second threshold, and flagging values in an anomaly map exceeding said threshold as anomalous.

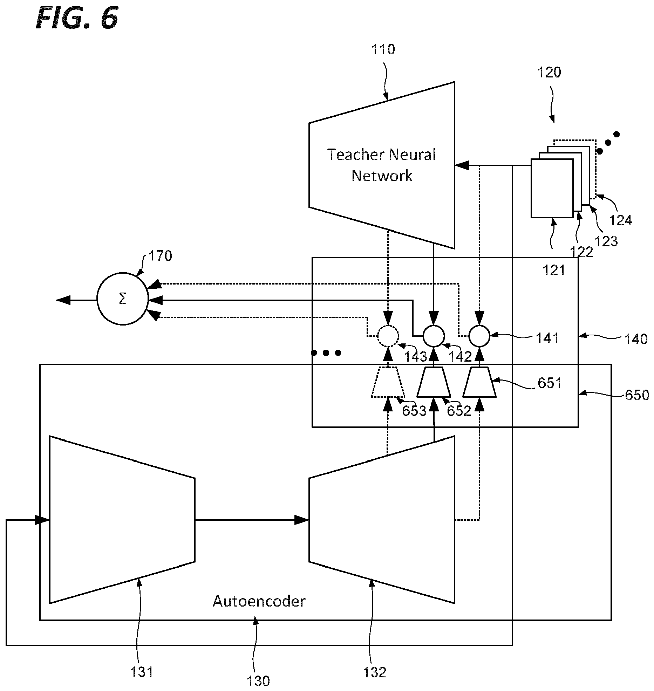

Figure 6 shows an anomaly detector in accordance with a further embodiment.

As discussed above, it has generally been assumed that the resolution of the features output by the teacher neural network is the same as the resolution of the features output by the auto-encoder at each pair of corresponding levels. It will be appreciated that this need not necessarily be the case- the resolution is dictated by the structure of the underlying neural networks, and in some cases it may expedient to use an available neural network which offers good performance, but for technical reasons outputs features at resolutions different to those available from the other neural network. Where this is the case, there may be provided a further step of adjusting the resolution of the features output by said teacher neural network or said auto-encoder or the output of one or more said error determinations to a standard resolution.

The anomaly detector of figure 6 corresponds substantially to that of figure 1, but further comprises an adaptor unit 650 configured to adjust the resolution of the features output by the auto-encoder to a standard resolution.

As shown the adaptor unit 600 comprises adaptor sub-units 651, 652 and 653, adjusting the resolution of the three sets of features output by auto-encoder 130 so as to correspond to the resolution of the corresponding level features output by the teacher neural network 110.

It will be appreciated that in certain embodiments it may be necessary to adjust some outputs in the manner, and not others, depending on the structure and configuration of the respective neural networks.

It will be appreciated that while as shown the adapter unit is part of the auto-encoder unit such that from the point of view of the difference calculator 140 the auto-encoder outputs features at the required resolution directly, the adaptor unit may be physically and/or logically separate from the auto-encoder.

Furthermore, it will be appreciated that the adaptor unit may equally be implemented so as to adjust the output of the teacher neural network instead of, or as well as, the output of the auto-encoder. In some embodiments the adaptor unit will up-sample feature sets to the native resolution of the input data sample or samples, but in other cases some other convenient common resolution may be selected.

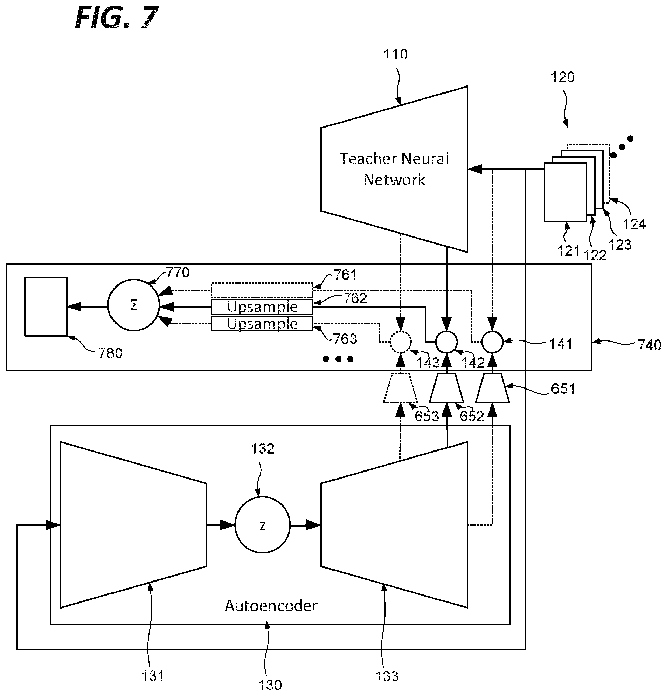

Figure 7 shows an anomaly detector in accordance with a further embodiment.

The anomaly detector of figure 7 corresponds substantially to that of figures 1 and 6, but further comprises up-sampling units 761, 762, 763. As discussed above, the difference calculators 141, 142, 143 may output a value by value comparison, (in the context of image data for example, a pixel by pixel comparison) of the features output by the Teacher Neural Network on one hand and the auto-encoder on the other, at difference respective levels. Although determining the simple presence of an anomaly calls simply for the determination of an overall difference value as discussed above for comparison with an anomaly threshold, additional value may be extracted by compiling an anomaly map indicated where in the sample the anomalous values are situated. As discussed above, this may be achieved by superposing the outputs of the difference calculators 141, 142, 143 so that the difference value corresponding to different parts of the sample at different levels are cumulated. The cumulated values can then be represented graphically, for example on their own or superposed on the original sample values. By this means, it becomes possible for a human viewer to quickly determine where an anomaly occurs, and even identify the nature of the anomaly. It will be appreciated that the superposition of the different difference value sets may be achieved by up-sampling the outputs of the lower resolution levels so that all difference value sets are available at the native resolution of the input sample for example.

As such, as shown in figure 7 the difference calculator 740 is adapted to adjust the resolution of the features output by the difference calculator to a standard resolution. In particular as shown, the output of the difference calculator 142 is up-sampled to the standard resolution by the up-sampler 762, and the output of the difference calculator 143 is up-sampled to the standard resolution by the up-sampler 763. In a case where the standard resolution is the native resolution of the input sample, the output of the difference calculator 141 will already be at the standard resolution, so no up-sampling is required. Other up-sampler configurations may be required depending on the selected standard resolution. The difference calculator further comprises an error mapper 771 to consolidate the up-sampled sets of features and then sum error values over the consolidated dataset to compile a difference value map 780. Optionally, the difference calculator may additional compare each value of the difference value map to a second threshold, and flag values in the difference value map exceeding said threshold as anomalous.

The difference value map may be presented graphically to a human user, or used to direct additional process steps for example to remediate the anomaly, or subjected to further analysis for example with a view to determining the likely cause of the anomaly, or to trace the corresponding back through the manufacturing process, supply chain or the like.

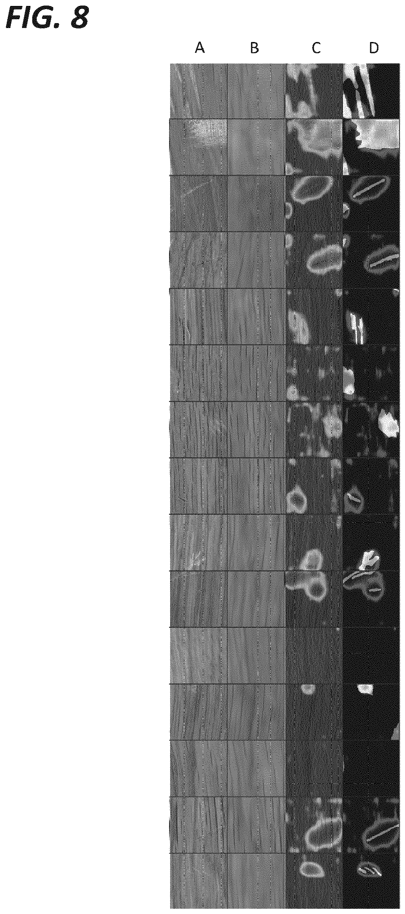

Figure 8 shows examples of anomaly detection with respect to certain real sample datasets.

As shown in figure 8, there is presented a matrix of fifteen rows and 7 columns. The columns are labelled A, B, C, D respectively from left to right. Each row starts with a new original sample in the left hand column (column A). The samples in question represent samples of a wood pattern, as obtained from https://www.mvtec.com/company/research/datasets/mvtec-ad/ under the Creative Commons Attribution-NonCommercial-ShareAlike 4.0 International License. Further information concerning the dataset is provided in the article by Paul Bergmann, Michael Fauser, David Sattlegger, Carsten Steger entitled MVTec AD - A Comprehensive Real-World Dataset for Unsupervised Anomaly Detection; in: IEEE Conference on Computer Vision and Pattern Recognition (CVPR), June 2019.

Certain samples exhibit anomalies in the form of scratches and other blemishes. The column B presents the output of a conventional neural network. On the basis of the respective sample image. It may be observed that generally the output in the second row does not effectively highlight or isolate anomalies.

Column C presents an example of an difference value map as may be obtained as discussed above for example by unit 740. It may be seen in each case that a heat map representing a difference level is superposed over the original sample, with high energy heatmap levels over the areas of each sample exhibiting anomalies.

Column D presents an example of an difference value map as may be obtained as discussed above for example by unit 740. It may be seen in each case that a heat map representing a difference level is superposed over the original sample, with high energy heat-map levels over the areas of each sample exhibiting anomalies, and further comprising in some cases a manually inscribed white marking, representing the location of anomalies as determined by a human assessor. As discussed above, in certain embodiments training datasets may comprise samples known to comprise anomalies. The images in column D may comprise such known anomalous samples. Furthermore, by indicating the location of the anomalies, training may be extended in the case of embodiments capable of indicating the location of anomalies to assessing the degree to which the system effectively determines the location of the anomalies, and taking this into account in optimising the auto-encoder parameters.

It will be appreciated that embodiments may be implemented wholly or partially in software. Software embodiments include but are not limited to application, firmware, resident software, microcode, etc. The invention can take the form of a computer program product accessible from a computer-usable or computer-readable medium providing program code for use by or in connection with a computer or an instruction execution system. Software embodiments include software adapted to implement the mechanisms discussed above with reference to figures 1 to 7. A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a drone, a computer or any other device with processing capability, such as a robot or other connected device, including IoT (Internet of Things) devices, head mounted displays with or without see through technology, glasses or any device allowing the display of lines or the like.

Accordingly, as described an anomaly detector uses two neural networks, the first, a general purpose classifying convolutional neural network operates as a teacher neural network, while a second neural network in an auto-encoder type configuration. Each of the two neural networks receives the same input stream, and generates respective feature outputs at different levels, corresponding to different resolutions for image data. The respective outputs of the two neural networks are compared at each level, and the resulting difference values consolidated across the difference levels to obtain a final difference value. In a training phase this difference value is used to drive the determination of the weights and biases of the auto-encoder, so as to obtain a auto-encoder trained for a particular input type, under the influence of the teacher neural network. In an operational mode, the difference value is compared to a threshold to determine whether a particular sample is anomalous or not. In certain embodiments, difference values a different levels may be scaled so as to be superimposed at a common resolution, thereby providing an error map indicating the location of anomalous values across the sample.

The examples described above are given as non-limitative illustrations of embodiments of the invention. They do not in any way limit the scope of the invention which is defined by the following claims.

## Claims

1. A method of constructing an anomaly detector for detecting an anomaly in a digital sample of a predetermined type and predetermined first resolution, said method comprising:

   - exposing a teacher neural network trained to extract features from digital data sets, to a plurality of digital samples of a training dataset of said predetermined type, to extract features representing each said digital sample at one or more levels;
   - exposing an auto-encoder to each said digital sample to reconstruct features representing said digital sample at one or more levels;
   - determining a difference value reflecting the difference between said extracted features and respective said reconstructed features for each said sample; and
   - repeating said steps of reconstructing features representing said training dataset with further said parameters until a minimal said difference value is obtained across said training dataset.

2. The method of claim 1 wherein the training dataset of said neural network is greater than the training dataset of said anomaly detector.

3. The method of claim 1 or 2 comprising the further step of selecting a threshold indicating the presence of an anomaly with reference to the distribution of difference values obtained across said training dataset.

4. The method of claim 3 wherein the minimum said difference value obtained across said training dataset is selected as said threshold indicating the presence of an anomaly.

5. The method of claim 3 comprising the further steps of identifying a subset of the datasets of said training dataset as constituting anomalous datasets, and isolating the difference values output by said anomaly detector for said anomalous datasets to derive a characteristic difference value, and selecting a threshold indicating the presence of an anomaly with reference to said characteristic difference value.

6. The method of any preceding claim comprising the further step of adjusting the resolution of the features output by said teacher neural network or said auto-encoder or the output of one or more said error determinations to a standard resolution.

7. The method of any preceding claim comprising the further steps of adjusting the resolution of the features output by each said error determination to a standard resolution, wherein said step of determining a difference value comprises up-sampling each said set of features to a predetermined resolution, consolidating the up-sampled sets of features and then summing over the consolidated dataset to obtain said difference value.

8. A method of detecting an anomaly in a digital sample of a predetermined type, said method comprising:

- exposing a teacher neural network trained to extract features from digital data sets to said digital sample to extract features representing said digital sample at one or more levels,
- exposing an auto-encoder trained to reconstruct said features of a training dataset of said predetermined type, to said digital sample, to reconstruct features representing said digital sample at one or more levels, determining a difference value reflecting the difference between each said extracted feature and a respective said reconstructed feature, and
- comparing said difference value to a threshold, determining said difference value to exceeds said threshold, and identifying said digital sample as anomalous.

9. The method of any preceding claim comprising the further step of adjusting the resolution of the features output by said teacher neural network or said auto-encoder or the output of one or more said error determinations to a standard resolution.

10. The method of any preceding claim comprising the further steps of adjusting the resolution of the features output each said error determination to a standard resolution, wherein said step of determining a difference value comprises up-sampling each said set of features to a predetermined resolution, consolidating the up-sampled sets of features and then summing over the consolidated dataset to obtain a difference value map, and comparing each value of said difference value map to a second threshold, and flagging values in an anomaly map exceeding said threshold as anomalous.

11. An anomaly detector for detecting anomalies in digital samples, said anomaly detector comprising a teacher neural network trained to extract features from a digital sample at one or more levels, an auto-encoder trained to reconstruct features representing said digital sample at one or more levels, a difference calculator adapted to determine a difference value reflecting the difference between each said extracted feature and a respective said reconstructed feature, and to compare said difference value to a threshold, determining said difference value to exceed said threshold, and identifying said digital sample as anomalous.

12. The anomaly detector of claim 11 further comprising an adaptor unit configured to adjust the resolution of the features output by said teacher neural network or said auto-encoder or by said difference calculator to a standard resolution.

13. The anomaly detector of claim 12 wherein said adaptor unit is configured to adjust the resolution of the features output by said difference calculator to a standard resolution, said anomaly detector further comprising an error mapper comprising an up-sampler configured to up-sample each said set of features to a predetermined resolution, to consolidate the up-sampled sets of features and then to sum error values over the consolidated dataset to compile a difference value map, and to compare each value of the difference value map to a second threshold, and to flag values in an anomaly map exceeding said threshold as anomalous.

14. The anomaly detector of any of claims 11 to 13 wherein said teacher neural network comprises a trained convolutional neural network.

15. A computer program comprising instructions implementing the steps of any of claims 1 to 10.

# FIG. 1

FIG. 2

FIG. 3

## FIG. 4

START — 400

405 —
expose teacher neural network to digital data sets

410 —
exposing said autoencoder to digital data sets of said training datasets of a training dataset

415 —
extract features representing training dataset

420 —
reconstruct features representing said training dataset

430 —
determine difference between extracted features and reconstructed features

440 —
Difference value minimised?

450 —
Adjust autoencoder parameters

N

Y

460 —
END

**FIG. 5**

START ←—500

505 ⟋
expose teacher neural network to digital sample

510 ⟋
exposing said autoencoder to digital sample

515 ⟋
extract features representing training dataset

520 ⟋
reconstruct features representing said training dataset

530 ⟋
determine difference between extracted features and reconstructed features

540 ⟋
Difference value exceeds threshold?

N

Y

560 ⟋
identifying digital sample as normal

550 ⟋
identifying digital sample as anomalous

## FIG. 6

## FIG. 7

*FIG. 8*

Europäisches
Patentamt

European
Patent Office

Office européen
des brevets

# EUROPEAN SEARCH REPORT

**Application Number**

EP 20 30 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAUL BERGMANN ET AL: "Uninformed Students: Student-Teacher Anomaly Detection with Discriminative Latent Embeddings", ARXIV.ORG, CORNELL UNIVERSITY LIBRARY, 201 OLIN LIBRARY CORNELL UNIVERSITY ITHACA, NY 14853, 6 November 2019 (2019-11-06), XP081526183, * abstract; figures 1-5; tables 1, 4-7 * * Appendix B; paragraph [0001] - paragraph [0005] * ----- | 1-15 | INV. G06N3/04 G06N3/08 |
| A | David Dehaene ET AL: "ITERATIVE ENERGY-BASED PROJECTION ON A NORMAL DATA MANIFOLD FOR ANOMALY LOCALIZATION", OpenReview of International Conference on Learning Representations (ICRL) 2020, 25 September 2019 (2019-09-25), pages 1-15, XP055720103, Retrieved from the Internet: URL:https://openreview.net/attachment?id=HJx81ySKwr&name=original_pdf [retrieved on 2020-08-04] * the whole document * ----- | 1-15 | |
| A,D | BERGMANN PAUL ET AL: "MVTec AD - A Comprehensive Real-World Dataset for Unsupervised Anomaly Detection", 2019 IEEE/CVF CONFERENCE ON COMPUTER VISION AND PATTERN RECOGNITION (CVPR), IEEE, 15 June 2019 (2019-06-15), pages 9584-9592, XP033687266, DOI: 10.1109/CVPR.2019.00982 [retrieved on 2020-01-08] * the whole document * ----- | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 5 August 2020 | Cilia, Elisa |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LIOU, C. Y. ; CHENG, W. C. ; LIOU, J. W. ; LIOU, D. R.** Auto-encoder for words. *Neurocomputing,* 2014, vol. 139, 84-96
- **LIOU, CHENG-YUAN ; HUANG, JAU-CHI ; YANG, WEN-CHIE.** Modeling word perception using the Elman network. *Neurocomputing,* 2008, vol. 71, 16-18
- **LIOU, CHENG-YUAN ; CHENG, WEI-CHEN ; LIOU, JIUN-WEI ; LIOU, DAW-RAN.** Auto-encoder for words. *Neurocomputing,* 2014, vol. 139, 84-96
- **KINGMA, D. P. ; WELLING, M.** *Auto-encoding variational bayes,* 2013
- **DIEDERIK P. KINGMA ; VOLODYMYR KULESHOV.** Stochastic Gradient Variational Bayes and the Variational Auto-encoder. *ICLR,* 2014, 1-4
- **BIN DAI ; DAVID P. WIPF.** Diagnosing and enhancing VAE models. *CoRR, abs/1903.05789,* 2019
- **PAUL BERGMANN ; MICHAEL FAUSER ; DAVID SATTLEGGER.** Carsten Steger entitled MVTec AD - A Comprehensive Real-World Dataset for Unsupervised Anomaly Detection. *IEEE Conference on Computer Vision and Pattern Recognition (CVPR),* June 2019